# EUROPÄISCHE PATENTSCHRIFT

(11) **EP 3 271 100 B1**
(45) Veröffentlichungstag und Bekanntmachung des Hinweises auf die Patenterteilung: **03.01.2024**
(21) Anmeldenummer: 16710405.8
(22) Anmeldetag: 02.03.2016
(51) Int. Cl.: B23F 5/16, B23F 21/00, B23F 17/00, B23F 23/12, B23F 19/10, B23P 13/02, B23P 15/14

(54) **VERZAHNUNGSVERFAHREN MIT ZAHNNACHBEARBEITUNG UND KOMBIWERKZEUG DAFÜR**
TOOTH-FORMING METHOD HAVING TOOTH FINISHING, AND COMBINATION TOOL THEREFOR
PROCÉDÉ SERVANT À TAILLER DES DENTS AVEC UN USINAGE ULTÉRIEUR DE DENTS ET OUTIL COMBINÉ ASSOCIÉ

(30) Priorität: 20.03.2015 DE 102015104242
(43) Veröffentlichungstag der Anmeldung: 24.01.2018
(73) Patentinhaber: Profilator GmbH & Co. KG, 42329 Wuppertal (DE)
(72) Erfinder: HEYN, Stefan, 45549 Sprockhövel (DE)
(74) Vertreter: Grundmann, Dirk
(86) Internationale Anmeldenummer: PCT/EP2016/054437
(87) Internationale Veröffentlichungsnummer: WO 2016/150666

(56) Entgegenhaltungen:
- WO-A1-2015/185186
- WO-A2-2015/014448
- DE-A1- 2 654 177
- DE-A1- 10 305 752
- DE-A1-102008 037 514
- DE-B4- 19 964 396
- US-A- 2 214 225
- US-B2- 8 732 937
- Fette Gmbh: "Fräsen und Entgraten in einem Arbeitsgang. CHAMFER-CUT Cutting and Deburring in One Process. CHAMFER CUT", , 1. Januar 2004 (2004-01-01), Seiten 1-6, XP55229970, Gefunden im Internet: URL:http://frezyslimakowe.pl/pliki/chamfer _cut.pdf [gefunden am 2015-11-20]
- "Abdachen und Verzahnen in einer Aufspannung Herstellung von Zahnrädern und verzahnten Bauteilen", WERKSTATT + BETRIEB, CARL HANSER VERLAG, MÜNCHEN DE, Bd. 146, Nr. 11, 1. November 2013 (2013-11-01), Seiten 56-57, XP001587012, ISSN: 0043-2792

## Beschreibung

Die Erfindung betrifft ein Verfahren zur Fertigung von Zahnrädern, bei dem in einem ersten Schritt mit einem von einer Werkzeugspindel drehangetriebenen Schälrad in ein von einer Werkstückspindel im Synchronlauf dazu drehangetriebenes Werkrad eine Verzahnung eingebracht wird, wobei die Werkstückspindel und die Werkzeugspindel in einem Achskreuzwinkel zueinander stehen und der Vorschub in Zahnflanken-Erstreckungsrichtung erfolgt, und bei dem in einem zweiten Schritt mit einem Zahnbearbeitungswerkzeug zumindest einige Zähne der Verzahnung spanabtragend bearbeitet werden.

Die DE 10 2008 037 514 A1 beschreibt ein Verfahren zum Verzahnen von Werkrädern. Der Rohling kann mit einem Wälzschälrad innen oder außen verzahnt werden. Hierzu werden das Werkrad auf eine Werkstückspindel und das Schälrad auf eine Werkzeugspindel aufgespannt. Werkzeugspindel und Werkstückspindel werden in einem Synchronlauf angetrieben. Die Werkstückspindelachse und die Werkzeugspindelachse stehen in einem Achskreuzwinkel zueinander, so dass das umfangsverzahnte Schälrad eine Schälbewegung vollführt, in der die Schneidkanten der Schneidzähne des Schälrades sich in Zahnerstreckungsrichtung durch das Werkstück hindurchbewegen und gleichzeitig eine abrollende Bewegung durchführen. Der Vorschub erfolgt in Zahnerstreckungsrichtung, bei einer Geradverzahnung also in Richtung der Werkstückspindelachse.

Die DE 199 64 396 B4 beschreibt eine Nachbearbeitung eines verzahnten Werkrades mit Hilfe eines Zahnbearbeitungswerkzeuges. Das Zahnbearbeitungswerkzeug ist ein Hinterlegungswerkzeug beziehungsweise ein Rastnutenwerkzeug, mit dem die Zahnflanken der zuvor gefertigten Zähne bearbeitet werden können.

Die US 4,726,720 beschreibt ebenfalls ein Nachbearbeitungsverfahren, bei dem vorverzahnte Rohlinge mit Schlagmessern bearbeitet werden. Bei den Schlagmessern handelt es sich um Abdachwerkzeuge, mit denen die Stirnkanten der Zähne mit Abdachungen versehen werden.

Es ist im Stand der Technik ferner bekannt, bereits verzahnte Werkräder anderweitig spanabhebend zu bearbeiten, wobei insbesondere die Zahnflanken oder die Stirnflächen der Zähne bearbeitet werden.

Die US 8,732,937 B2 beschreibt ein Verfahren gemäß dem Oberbegriff des Anspruchs 1 zum Verzahnen von Zahnrädern, bei dem eine Werkzeugspindel zwei Wälzschälwerkzeuge trägt, wobei ein Wälzschälwerkzeug ein Schruppwerkzeug und ein anderes Schälwerkzeug ein Schlichtwerkzeug ist. Die US 8,732,937 B2 beschreibt auch ein Kombiwerkeug gemäß dem Oberbegriff des unabhängigen Anspruchs 3.

Die DE 103 05 752 A1 beschreibt ein Kombinationswerkzeug, bei dem auf einer gemeinsamen Welle ein Wälzschälrad und ein Schabrad für die Feinbearbeitung angeordnet ist.

Die WO 2015/014448 A1 beschreibt ein Verfahren, bei dem mit einem Schälrad eine Verzahnung gefertigt werden kann und bei dem mit einem Schälrad Zahnkanten bearbeiten werden können.

Beim Stand der Technik wird der erste Schritt, also beispielsweise das Verzahnen eines unverzahnten Rohlings, auf einer ersten Werkzeugmaschine durchgeführt und der zweite Schritt, also die Zahnnachbearbeitung, auf einer zweiten Werkzeugmaschine. Zwischen den Bearbeitungsschritten muss das Werkstück umgespannt werden, so dass Spannfehler auftreten können. Es treten insbesondere Rundlauffehler und dergleichen auf, da die Achse des Werkrades toleranzbedingt nicht genau koaxial zur Achse der Werkstückspindel liegt. Auch die verwendeten Werkzeuge besitzen insbesondere aufgrund von Toleranzen Rundlauffehler.

Die Rundlauffehler der beiden Werkzeuge und der Werkstückaufspannungen können sich nachteilhaft addieren. Hierdurch vergrößern sich die Fertigungsfehler.

Der Erfindung liegt die Aufgabe zugrunde, ein Verfahren anzugeben, mit dem sich die toleranzbedingten Fertigungsfehler minimieren lassen.

Gelöst wird die Aufgabe durch die in dem unabhängigen Anspruch 1 angegebene Erfindung. Die Unteransprüche stellen nicht nur vorteilhafte Weiterbildungen des im Hauptanspruch angegebenen Verfahrens dar. Die Unteransprüche sind auch für sich genommen eigenständige Lösungen der Aufgabe.

Zunächst und im Wesentlichen ist vorgesehen, dass das Zahnbearbeitungswerkzeug für die Nachbearbeitung und das Schälrad fest miteinander verbunden sind. Die beiden Werkzeuge bilden ein Kombiwerkzeug aus, das von derselben Werkzeugspindel getragen wird. Die Bearbeitung des Zahnrades, also die Verzahnung und die Nachbearbeitung erfolgen in einer einzigen Aufspannung des Werkrades. Da zwischen den beiden Bearbeitungsschritten weder das Werkrad noch das Werkzeug von der zugeordneten Spindel entfernt wird, treten die oben erwähnten, dem Umspannen geschuldeten, sich addierenden Rundlauffehler nicht mehr auf. Bei einer Serienfertigung ist die Lage des Zahnbearbeitungswerkzeugs gegenüber dem Schälrad ist immer dieselbe. Gegebenenfalls vorhandene Rundlauffehler können durch die Steuerung der Achsen der Werkzeugmaschine kompensiert werden. Bevorzugt wird ein noch unverzahnter oder lediglich vorverzahnter Rohling mit dem Futter der Werkstückspindel gefasst. Danach erfolgt in einem ersten Verfahrensschritt die Verzahnung des Rohlings beziehungsweise die Fertigverzahnung des Rohlings. Die Achse der Verzahnung liegt dann bevorzugt exakt in der Achse der Werkstückspindel. Der Verzahnungsschritt erfolgt mit einem Vorschub in Richtung der Zahnflankenerstreckung der Verzahnung mit einem Schneidzähne aufweisenden Schälwerkzeug, welches in einem Synchronlauf zur Drehung des Werkstücks drehangetrieben wird. Im zweiten Verfahrensschritt wird der verzahnte Rohling in derselben Aufspannung in der Werkstückspindel mit dem Zahnbearbeitungswerkzeug weiter bearbeitet. Es erfolgt eine Zahnflanken- oder eine Zahnstirnflächen-Bearbeitung. Auch hierzu werden Werkzeugspindel und Werkstückspindel in einem Synchronlauf drehangetrieben. Das Drehzahlverhältnis ist jedoch ein anderes. Auch die Achskreuzwinkel unterscheiden sich im ersten und im zweiten Verfahrensschritt voneinander. Es ist deshalb vorgesehen, dass zwischen den beiden Schritten ausschließlich die Relativpositionen von Werkzeugspindel gegenüber Werkstückspindel und das Drehzahlverhältnis der beiden Spindeln verändert werden. Bei der Zahnbearbeitung handelt es sich um ein Abdachen, um das Einbringen von Hinterlegungen oder Rastnuten oder um eine universale Fräs- bzw. Bohrbearbeitung.

Bevorzugt handelt es sich bei dem Zahnbearbeitungswerkzeug demzufolge um ein Hinterlegungs-, Rastnut-, Universal-Fräs- oder Bohr-Werkzeug oder ein Schlagmesser-Werkzeug, welches ein oder mehrere einzelne Schlagmesser mit ein oder mehreren Schneiden aufweist. Die Schneiden laufen beim Schnitt entlang einer Schnitthüllkurve um die Drehachse. Es handelt sich um umlaufende Schneiden. Die Schnitthüllkurve, entlang der sich die Schneidkante des Schlagmessers bewegt, kann einen kleineren Radius aufweisen, als die Schneidzähne des Schälrades. Schälrad und Zahnbearbeitungswerkzeug liegen beim Kombiwerkzeug in axialer Anordnung hintereinander.

Die Erfindung betrifft darüber hinaus auch ein Kombiwerkzeug gemäß dem unabhängigen Anspruch 3 zur Verwendung bei einem Verfahren der vorbeschriebenen Art. Wesentlich ist ein Schälrad, das fest mit einem Zahnbearbeitungswerkzeug verbunden ist. Das Zahnbearbeitungswerkzeug kann ein eine Schneide aufweisendes Schlagmesser tragen oder ein Hinterlegungs-, Rastnut-, Universal-Fräs- oder Bohr-Werkzeug sein. Das Schälrad und das Zahnbearbeitungswerkzeug können axial hintereinanderliegend angeordnet sein, wobei das Zahnbearbeitungswerkzeug am freien Ende des Kombiwerkzeugs sitzt und das Schälrad zwischen Einspannende und Zahnbearbeitungswerkzeug angeordnet ist.

Ein Ausführungsbeispiel der Erfindung wird nachfolgend anhand beigefügter Zeichnungen erläutert. Es zeigen:
- Fig. 1: schematisch ein Kombiwerkzeug 3 bei einer wälzschälenden Verzahnung eines fest mit einer Werkstückspindel 5 verbundenen Werkrades 1,
- Fig. 2: eine - bezogen auf die Werkstückspindel 5 - um 90° versetzte Schnittdarstellung gemäß Figur 1,
- Fig. 3: eine Darstellung gemäß Figur 1 beim Zahnnachbearbeiten,
- Fig. 4: die Unteransicht auf das Kombiwerkzeug 3,
- Fig. 5: eine erste Seitenansicht auf das Kombiwerkzeug 3, und
- Fig. 6: eine zweite Seitenansicht auf das Kombiwerkzeug 3.

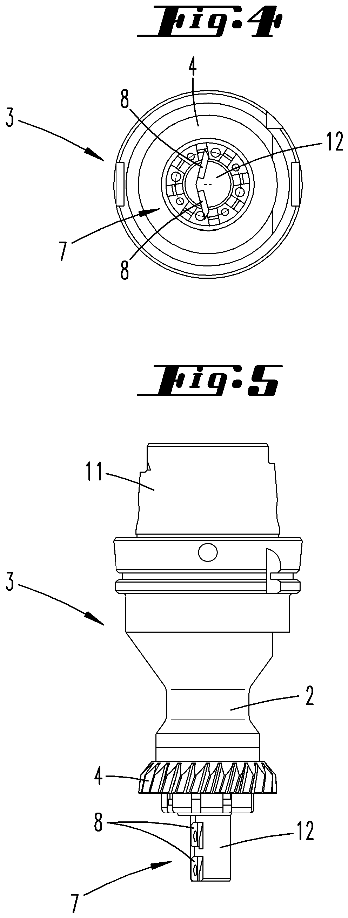

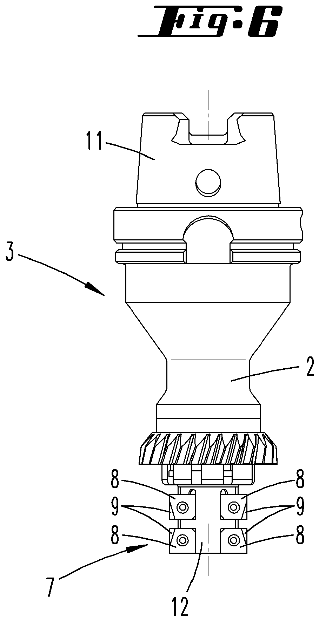

Das in den Figuren 4 bis 6 dargestellte Kombiwerkzeug 3 besitzt ein Einspannende 11, mit dem es in ein Einspannfutter einer Werkzeugspindel 2 eingespannt werden kann, welche Werkzeugspindel 2 von einem Elektromotor drehangetrieben werden kann. Der Elektromotor wird von einer Steuereinrichtung angesteuert. Die Steuereinrichtung steuert auch einen weiteren Elektromotor zum Antrieb einer Werkstückspindel 5 an. Die Werkstückspindel 5 besitzt ein Futter 10, in dem ein zu bearbeitendes Werkrad 1 eingespannt ist. Die Steuereinrichtung ist so ausgelegt, dass die Werkzeugspindel 2 und die Werkstückspindel 5 in einem Synchronlauf zueinander angetrieben werden.

Das Kombiwerkzeug 3 besitzt ein Schälrad 4, mit dem das Werkrad als Rohling durch Wälzschälen mit einer Innenverzahnung 6 versehen werden kann, wie es die DE 10 2008 037 514 A1 beschreibt. Hierzu werden die Werkzeugspindel 2 und die Werkstückspindel 5 in einem derartigen Synchronlauf zueinander angetrieben, dass die Schneidzähne des Schälrades 4 schälend in die sich ausbildenden Zahnlücken der Verzahnung 6 eintreten. Die Achse der Werkzeugspindel 2 steht hierzu in einem Achskreuzwinkel α zur Achse der Werkstückspindel 5.

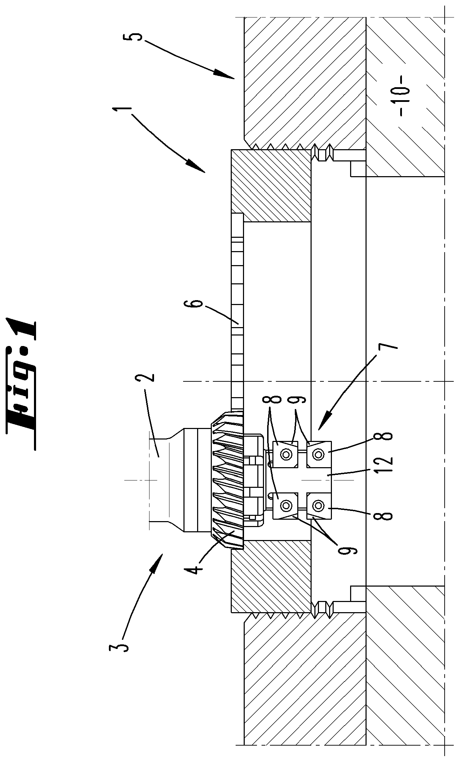

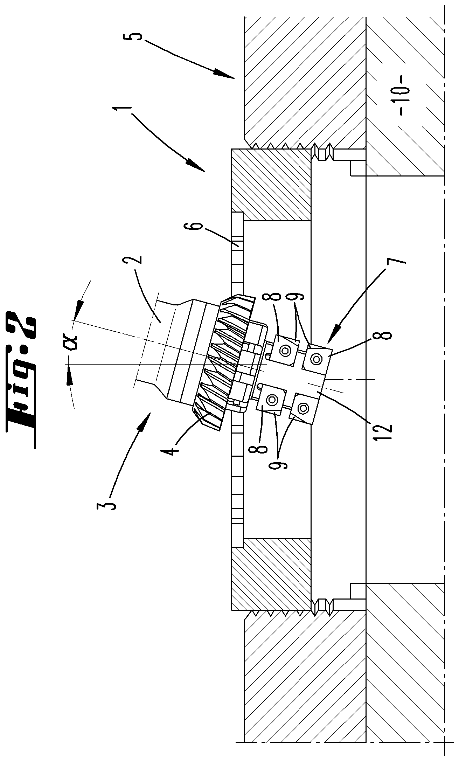

Die Figuren 1 und 2 zeigen einen diesbezüglichen ersten Bearbeitungsschritt, bei dem der Vorschub in Achsrichtung der Werkstückspindel 5 gerichtet ist, so dass eine Geradverzahnung erzeugt wird. Bei einer Schrägverzahnung ist im Vorschub eine Relativdrehung überlagert. In analoger Weise lassen sich auch außen verzahnte Werkräder 1 verzahnen.

Die Schneidzähne des Schälrades 4 weisen von dem Einspannende 11 weg in Richtung zum freien Ende des Kombiwerkzeuges 3, welches von einem Zapfen 12 ausgebildet ist. Der Durchmesser des Zapfens 12 ist geringer, als der Durchmesser des Schälrades 4.

Der fest mit dem Schälrad 4 verbundene Zapfen 12 trägt mehrere Schlagmesser 8, die jeweils eine Schneide 9 aufweisen. Bei einer Drehung des Kombiwerkzeuges 3 um seine Drehachse bewegen sich die Schneiden 9 entlang einer Hüllkurve um die Figurenachse des Kombiwerkzeuges 3. Die Hüllfläche, innerhalb der die Schneiden 9 umlaufen, besitzt einen geringeren Durchmesser als die Schneidzähne des Schälrades 4.

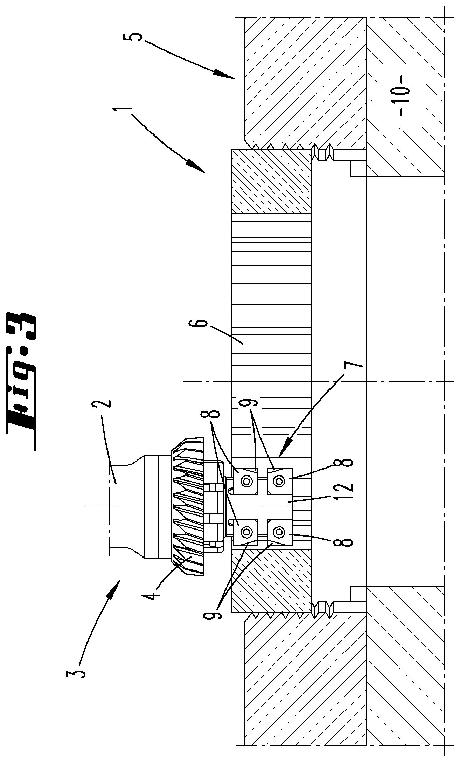

Beim Ausführungsbeispiel ist das am freien Ende des Kombiwerkzeugs 3 angeordnete Zahnbearbeitungswerkzeug 7 ein Werkzeug zum Erzeugen von Rastnuten beziehungsweise Hinterlegungen. Hierzu wird das Zahnflankenbearbeitungswerkzeug 7, wie in der Figur 3 gezeigt, in eine Bearbeitungsposition gebracht. Dabei verläuft die Achse der Werkstückspindel 5 parallel zur Achse der Werkzeugspindel 2. Der in der Figur 3 dargestellte zweite Bearbeitungsschritt erfolgt zeitlich nach dem in den Figuren 1 und 2 dargestellten ersten Bearbeitungsschritt, jedoch ohne dass zwischenzeitig das Werkrad 1 aus dem Futter 10 genommen wird beziehungsweise ohne dass zwischenzeitig das Kombiwerkzeug 3 der Werkzeugspindel 2 entnommen wird. Sowohl das Kombiwerkzeug 3 als auch das Werkrad 1 bleiben in der jeweiligen Aufspannung.

Bei dem in der Figur 3 dargestellten Bearbeitungsschritt werden die Werkzeugspindel 2 und die Werkstückspindel 5 ebenfalls in einem Synchronlauf zueinander angetrieben, jedoch mit einem anderen Drehzahlverhältnis, so dass in die Zahnflanken der im ersten Bearbeitungsschritt erzeugten Verzahnung Rastnuten oder Hinterlegungen eingebracht werden. Der Vorschub erfolgt hier in Radialrichtung zur Werkstückspindel 5.

Bei einem nicht dargestellten Ausführungsbeispiel kann das Zahnflankenbearbeitungswerkzeug ein Abdachwerkzeug sein, mit dem die Stirnflächen der Zähne abgedacht werden, die zuvor im ersten Verfahrensschritt erzeugt worden sind.

Das Zahnbearbeitungswerkzeug 7 und das Schälrad 4 sind fest miteinander verbunden und bilden somit das Kombiwerkzeug 3 aus. Zwischen den beiden Schritten bleibt das Kombiwerkzeug 3 mit der Werkzeugspindel 2 und das Werkrad 1 mit der Werkstückspindel 5 verbunden.

Zwischen den beiden Schritter werden lediglich die Relativposition von Werkzeugspindel 2 gegenüber Werkstückspindel 5 und das Drehzahlverhältnis der beiden Spindeln 2, 5 verändert.

Gemäß dem Verfahren ist das Zahnbearbeitungswerkzeug 7 ein Abdach-, Hinterlegungs-, Rastnut-, Universal-Fräs- oder Bohr-Werkzeug.

Das Zahnbearbeitungswerkzeug 7 kann ein Schlagmesser mit ein oder mehreren sich entlang einer Schnitthüllkurve umlaufenden Schneiden sein.

Bei dem erfindungsgemäßen Kombiwerkzeug ist ein Schälrad 4 fest mit einem Zahnbearbeitungswerkzeug 7 verbunden.

Das Zahnbearbeitungswerkzeug 7 trägt ein mindestens eine Schneide aufweisendes Schlagmesser 8 oder ist ein Hinterlegungs-, Rastnut-, Universal-Fräs- oder Bohr-Werkzeug.

Das Schälrad 4 kann zwischen Zahnbearbeitungswerkzeug 7 und einem Einspannende 11 des Kombiwerkzeuges 3 angeordnet sein.

Das Zahnbearbeitungswerkzeug 7 kann dem Einspannende 11 gegenüberliegenden freien Ende des Kombiwerkzeuges 3 zugeordnet sein.

### Bezugszeichenliste:

| | | | |
|---|---|---|---|
| 1 | Zahnrad, Werkrad | α | Achskreuzwinkel |
| 2 | Werkzeugspindel | | |
| 3 | Kombiwerkzeug | | |
| 4 | Schälrad | | |
| 5 | Werkstückspindel | | |
| 6 | Verzahnung | | |
| 7 | Zahnbearbeitungswerkzeug | | |
| 8 | Schlagmesser | | |
| 9 | Schneide | | |
| 10 | Futter | | |
| 11 | Einspannende | | |
| 12 | Zapfen | | |

## Patentansprüche

1. Verfahren zur Fertigung von Zahnrädern, bei dem in einem ersten Schritt mit einem von einer Werkzeugspindel (2) drehangetriebenen Schälrad (4) in ein von einer Werkstückspindel (5) im Synchronlauf dazu drehangetriebenes Werkrad (1) eine Verzahnung (6) eingebracht wird, wobei die Werkstückspindel (5) und die Werkzeugspindel (2) in einem Achskreuzwinkel (α) zueinander stehen und der Vorschub in Zahnflanken-Erstreckungsrichtung erfolgt, und bei dem in einem zweiten Schritt mit einem Zahnbearbeitungswerkzeug (7) zumindest einige Zähne der Verzahnung (6) spanabtragend bearbeitet werden, wobei das Zahnbearbeitungswerkzeug (7) und das Schälrad (4) fest miteinander verbunden ein Kombiwerkzeug (3) ausbilden und zwischen den beiden Schritten das Kombiwerkzeug (3) mit der Werkzeugspindel (2) und das Werkrad (1) mit der Werkstückspindel (5) verbunden bleibt, **dadurch gekennzeichnet, dass** das Zahnbearbeitungswerkzeug (7) ein Abdach-, Hinterlegungs-, Rastnut-, Universal-Fräs- oder Bohr-Werkzeug ist, wobei die beiden Bearbeitungsschritte bei unterschiedlichen Drehzahlverhältnissen und Achskreuzwinkeln (α) durchgeführt werden und zwischen den beiden Bearbeitungsschritten lediglich die Relativposition von Werkzeugspindel (2) gegenüber der Werkstückspindel (5) und das Drehzahlverhältnis von Werkzeugspindel (2) zu Werkstückspindel (5) verändert wird.

2. Verfahren nach Anspruch 1, **dadurch gekennzeichnet, dass** das Zahnbearbeitungswerkzeug (7) ein Schlagmesser mit ein oder mehreren sich entlang einer Schnitthüllkurve umlaufenden Schneiden ist.

3. Kombiwerkzeug (3) zur Verwendung bei einem Verfahren gemäß Anspruch 1 oder 2, bei dem ein Schälrad (4) fest mit einem Zahnbearbeitungswerkzeug (7) verbunden ist, **dadurch gekennzeichnet, dass** das Zahnbearbeitungswerkzeug (7) ein mindestens eine Schneide (9) aufweisendes Schlagmesser (8) trägt oder ein Hinterlegungs-, Rastnut-, Universal-Fräs- oder Bohr-Werkzeug ist, welches gegenüber dem Schälrad (4) bei einem anderen Drehzahlverhältnis von Werkstückspindel (5) und Werkzeugspindel (2) und einem anderen Achskreuzwinkel (α) zwischen Werkstückspindel (5) und Werkzeugspindel (2) zu betreiben ist

4. Kombiwerkzeug nach Anspruch 3, **dadurch gekennzeichnet, dass** das Schälrad (4) zwischen dem Zahnbearbeitungswerkzeug (7) und einem Einspannende (11) des Kombiwerkzeuges (3) angeordnet ist.

5. Kombiwerkzeug nach einem der Ansprüche 3 oder 4, **dadurch gekennzeichnet, dass** das Zahnbearbeitungswerkzeug (7) dem Einspannende (11) gegenüberliegenden freien Ende des Kombiwerkzeuges (3) zugeordnet ist.

## Claims

1. A method for producing gears, in which a skiving wheel (4), which is rotationally driven by a tool spindle (2), produces a gearing (6) in a workpiece gear (1), which is rotationally driven synchronously with the skiving wheel by a workpiece spindle (5), in a first step, wherein the workpiece spindle (5) and the tool spindle (2) are aligned at an axial intersection angle (α) to one another and the advance takes place in the direction, in which the tooth flanks extend, wherein at least a few teeth of the gearing (6) are machined with a tooth machining tool (7) in a second step, wherein the tooth machining tool (7) and the skiving wheel (4) are rigidly connected to one another and form a combination tool (3), and wherein the combination tool (3) remains connected to the tool spindle (2) and the workpiece gear (1) remains connected to the workpiece spindle (5) between the two steps, **characterized in that** the tooth machining tool (7) is a scarping tool, an undercutting tool, a grooving tool or a universal milling or boring tool, wherein the two machining steps are carried out with different speed ratios and axial intersection angles (α) and merely the position of the tool spindle (2) relative to the workpiece spindle (5) and the speed ratio between the tool spindle (2) and the workpiece spindle (5) are changed between the two steps.

2. The method according to claim 1, **characterized in that** the tooth machining tool (7) is a fly cutter with one or more cutting edges, which revolve along a cutting envelope.

3. A combination tool (3) for use in a method according to claim 1 or 2, in which a skiving wheel (4) is rigidly connected to a tooth machining tool (7), **characterized in that** the tooth machining tool (7) carries a fly cutter (8) with at least one cutting edge (9) or a scarping tool, an undercutting tool, a grooving tool or a universal milling or boring tool, which in relation to the skiving wheel (4) is operated with a different speed ratio between the workpiece spindle (5) and the tool spindle (2) and a different axial intersection angle (α) between the workpiece spindle (5) and the tool spindle (2).

4. The combination tool according to claim 3, **characterized in that** the skiving wheel (4) is arranged between the tooth machining tool (7) and a clamping end (11) of the combination tool (3).

5. The combination tool according to one of claims 3 or 4, **characterized in that** the tooth machining tool (7) is assigned to the free end of the combination tool (3), which lies opposite of the clamping end (11).

## Revendications

1. Procédé de fabrication de roues dentées, pour lequel une denture (6) est pratiquée dans une première étape dans une roue à usiner (1) entraînée en rotation par une broche porte-pièce (5) de manière synchrone par rapport à celle-ci, avec une roue de décolletage (4) entraînée en rotation par une broche porte-outil (2), sachant que la broche porte-pièce(5) et la broche porte-outil (2) sont situées l'une par rapport à l'autre selon un angle de croisement axial (α) et l'avance a lieu en direction de l'extension des flancs de dent et pour lequel dans une deuxième étape, au moins plusieurs dents de la denture (6) sont usinées par enlèvement de copeaux à l'aide d'un outil d'usinage de dents (7), sachant que l'outil d'usinage de dents (7) et l'outil de décolletage (4) reliés l'un à l'autre de manière solidaire constituent un outil combiné (3) et entre les deux étapes, l'outil combiné (3) reste relié à la broche porte-outil (2) et la roue à usiner (1) à la broche porte-pièce (5), **caractérisé en ce que** l'outil d'usinage de dents (7) est un outil d'entrée de dent, à générer des contre-dépouilles, à rainure d'encliquetage, de fraisage ou de perçage universel, sachant que les deux étapes d'usinage sont exécutées à des rapports de vitesse de rotation et à des angles de croisement axial (α) différents et entre les deux étapes d'usinage seule la position relative de la broche porte-outil (2) est modifiée par rapport à la broche porte-pièce (5) et le rapport de vitesse de rotation de la broche porte-outil (2) par rapport à la broche porte-pièce (5).

2. Procédé selon la revendication 1, **caractérisé en ce que** l'outil d'usinage de dents (7) est un couteau frappeur avec un ou plusieurs tranchants passant le long d'une courbe d'enveloppante de coupe.

3. Outil combiné (3) destiné à l'utilisation dans un procédé selon la revendication 1 ou 2, pour lequel un roue de décolletage (4) est reliée de façon solidaire à un outil d'usinage de dents (7), **caractérisé en ce que** l'outil d'usinage de dents (7) porte au moins un couteau frappeur (8) comportant au moins un tranchant (9) ou est un outil à générer des contre-dépouilles, à rainure d'encliquetage, de fraisage ou de perçage universel, lequel doit être utilisé par rapport à la roue de décolletage (4) à un autre rapport de vitesse de rotation de la broche porte-pièce (5) et de la broche porte-outil (2) et un autre angle de croisement axial (a) entre la broche porte-pièce (5) et la broche porte-outil (2).

4. Outil combiné selon la revendication 3, **caractérisé en ce que** la roue de décolletage (4) est disposée entre l'outil d'usinage de dents (7) et un système de serrage (11) de l'outil combiné (3).

5. Outil combiné selon l'une quelconque des revendications 3 ou 4, **caractérisé en ce que** l'outil d'usinage de dents (7) est attribué à l'extrémité libre de l'outil combiné (3) opposée au système de serrage (11).
